# EUROPÄISCHE PATENTSCHRIFT

(11) **EP 0 716 900 B1**
(45) Veröffentlichungstag und Bekanntmachung des Hinweises auf die Patenterteilung: **15.03.2000**
(21) Anmeldenummer: 95119523.9
(22) Anmeldetag: 12.12.1995
(51) Int. Cl.: B23Q 9/00

(54) **Maschinenständer zur Aufnahme eines als Trennschleifer ausgebildeten Handwerkzeuges**
Machine post for holding a hand-held tool as a cut-off grinder
Support de machine pour la réception d'un outil à main en forme de tronçonnerie

(30) Priorität: 15.12.1994 AT 234694
(43) Veröffentlichungstag der Anmeldung: 19.06.1996
(73) Patentinhaber: Herburger, Josef, 6951 Lingenau (AT)
(72) Erfinder: Herburger, Josef, 6951 Lingenau (AT)
(74) Vertreter: Hefel, Herbert, Dipl.-Ing.

(56) Entgegenhaltungen:
- EP-A- 0 235 058
- GB-A- 2 196 575
- US-A- 2 677 399
- US-A- 2 708 463

## Beschreibung

Die Erfindung bezieht sich auf einen Maschinenständer zur Aufnahme eines als Trennschleifer ausgebildeten Handwerkzeuges nach den Merkmalen des Oberbegriffes des Patentanspruches 1, und wie z.B. aus GB-A-2.196.575 bekannt ist.

Ein Maschinenständer dieser Art ist weiterhin in der AT-PS E 48388 (EP-A-235 058) gezeigt und beschrieben. Es handelt sich hier um einen Schneidständer für einen tragbaren elektrischen Winkelschleifer mit einer Grundplatte, auf der ein Lager befestigt ist, das eine Schwenkachse für einen Arm trägt, der einen Bügel bildet, zwischen dessen Schenkel der Vorderteil des Schleifers zentriert ist. Der Bügel schließt mit dem Arm, der ihn mit dem Lager verbindet, einen Winkel von 120° ein, so daß der Schleifer vertikal ausgerichtet ist, wobei der Handgriff nach oben weist und um 30° nach hinten geneigt ist, um unmittelbar vom Benutzer ergriffen und betätigt zu werden. Der Arm ist zur Verschwenkung des Schleifers in der oberen Ruhestellung durch eine Verriegelung blockiert. Der Schwenkarm liegt in der unteren Stellung gegen einen Anschlag an, der die Schnittiefe der Schleifscheibe begrenzt. Das Lager ist verstellbar und parallel zu einer Seite der Grundplatte geführt. Der Weg der Schleifscheibe bzw. der Trennscheibe ist begrenzt, und zwar durch das Ausmaß des Winkels, um den der Schwenkarm verstellbar ist, so daß nur schmale Werkstücke abgeschnitten werden können, also Profilschienen, Stangen, Rohre u.dgl.

Der bereits oben erwähnte und bekannte Maschinenständer nach der GB-A-2 196 575, dient der Aufnahme einer motorisch angetrieben Werkzeugmaschine, beispielsweise einer Säge oder eines Nutenhobels, und besitzt einen im wesentlichen U-förmigen Halter, und dieser Halter ist entlang einer stangenartigen Führung verschiebbar gelagert. Die beidseitigen Enden der Führung sind über Lagerböcke mit einer Ständerplatte verbunden und die Führung erstreckt sich parallel zur Ebene der Ständerplatte. Jeder Lagerbock besteht aus einem mit der Ständerplatte verbundenen Tragteil. Die Ständerplatte ist als Rechteck ausgebildet und die Führung verläuft parallel zu den Längsrändern dieses Rechteckes. Am U-förmigen, verschiebbaren Halter ist eine horizontale Montageplatte angelenkt, die die Werkzeugmaschine trägt, deren schneidendes Werkzeug durch einen Schlitz der Montageplatte ragt. Der U-förmige Halter ist zusammen mit der von ihm getragenen Montageplatte um die Achse der Führung schwenkbar, so daß die Montageplatte auf unterschiedlich starke Werkstücke auflegbar ist. Der vom Schneidwerkzeug überfahrene Bereich der Ständerplatte ist austauschbar gelagert. In randseitig an der Ständerplatte vorgesehenen Führungsbolzen sind stabartige Holme verschieb- und festlegbar gelagert, die endseitig ein Anschlaglineal tragen. Die mit einer solchen Einrichtung durchführbaren Arbeiten beschränken sich auf Schneiden im Sinne von Durchtrennen eines plattenförmigen oder stabartigen Werkstückes und auf das Nuten eines solchen Werkstückes.

Von diesem Stand der Technik geht die Erfindung aus, die darauf abzielt, den Maschinenständer in der Weise auszubilden, daß nicht nur lange Schnitte durchgeführt werden können, sondern auch Gehrungs- und Winkelschnitte, und zwar mit unterschiedlichen Schnittiefen. Zur Lösung dieser Aufgabe schlägt die Erfindung jene Maßnahmen vor, die Inhalt und Gegenstand des kennzeichnenden Teiles des Patentanspruches 1 sind. Zweckmäßige Ausgestaltungen der Erfindung sind in den Unteransprüchen definiert.

Um die Erfindung zu veranschaulichen, wird ein Ausführungsbeispiel anhand der Zeichnung näher erläutert, ohne dadurch die Erfindung auf das gezeigte Ausführungsbeispiel einzuschränken. Es zeigen:
- Fig. 1: eine Ansicht;
- Fig. 2: eine Draufsicht und
- Fig. 3: eine Seitensicht, wobei aus Gründen der Übersichtlichkeit nur in der Fig. 1 der Trennschleifer eingezeichnet ist.

Der Maschinenständer besitzt eine rechteckige, längliche Ständerplatte 1, an deren beiden endseitigen Schmalseiten Lagerböcke 2 festgelegt sind. Jeder Lagerbock 2 besteht aus einem Tragteil 3, der hier als Winkelprofilstück ausgebildet ist, und einem Schwenkteil 4, wobei diese Schwenkteile 4 endseitig an einer Führung befestigt sind, die hier aus den beiden parallel zueinander angeordneten und voneinander distanzierten Stangen 5 gebildet ist. Diese Führung kann auch aus einem Profilrohr oder mehreren Profilrohren bestehen. Diese beiden Schwenkteile 4 sind als Kreisscheiben ausgebildet mit einer mittleren Gewindebohrung, in welche von der Außenseite des jeweiligen Lagerbockes 2 her ein Gewindebolzen 6 einschraubbar ist. Dieser Gewindebolzen 6 besitzt einen gegenüber seinem Gewindeteil verbreiterten Kopf mit einer Querbohrung zur Aufnahme eines Knebels 7. Die Durchstecköffnung für diesen Gewindebolzen 6 im Tragteil 3 des Lagerbockes 2 ist als vertikaler Längsschlitz 8 ausgebildet.

Zwischen Schwenkteil 4 und Tragteil 3 ist noch ein Widerlager 9 angeordnet, das hier ebenfalls kreisscheibenförmig gestaltet ist und das an seiner dem Tragteil 3 zugewandten Seite eine vertikal verlaufende Feder 10 aufweist, die in eine dazu korrespondierende Nut 21 am Tragteil 3 liegt. An diesem Widerlager 9 ist seitlich eine Lochleiste 11 befestigt mit einer Vielzahl in gleichen Abständen vorgesehenen Bohrungen. Am Tragteil 3 ist ein Federbolzen 12 verschiebbar gelagert, der in eine der Bohrungen der Lochleiste 11 als Raste ragt. Beide Lagerböcke 2 sind im wesentlichen gleich aufgebaut. An der durch die Stangen 5 gebildeten Führung ist ein Halter 13 verschiebbar gelagert, der einen U-förmigen Querschnitt aufweist, zwischen dessen beiden Wangen der Trennschleifer 20 festgelegt ist. Im Gehäuse des Trennschleifers 20 sind an zwei diametral liegenden Stellen Gewindebohrungen vorgesehen, die der alternativen Aufnahme eines Handgriffes dienen, wenn der Trennschleifer 20 manuell geführt wird. In den Wangen des Halters 13 sind Bohrungen 14 ausgespart, durch welche die Befestigungsschrauben steckbar sind, die in die genannten Gewindebohrungen des Gehäuses des Trennschleifers 20 einschraubbar sind.

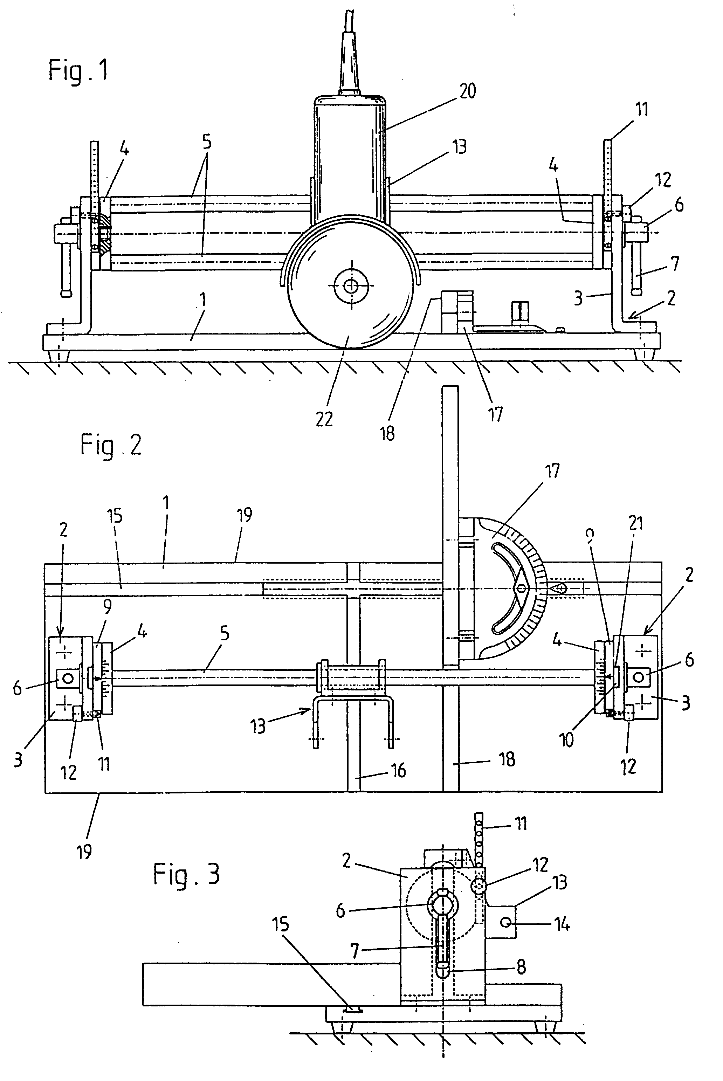

Parallel zu den Längskanten 19 der Ständerplatte 1 und - bezogen auf die Führung für den Halter 13 - auf der diesem Halter 13 abgewandten Seite ist in dieser Ständerplatte 1 eine Nut 15 vorgesehen, die von einer zweiten, dazu rechtwinklig verlaufenden Nut 16 gekreuzt ist. Die letzterwähnte, quer verlaufende Nut 16 ist im Quermittelbereich der Ständerplatte 1 angeordnet. Diese Nuten dienen zur Aufnahme und Führung eines Schlittens 17, an dem ein Anschlaglineal 18 festgelegt ist. Der Schlitten 17 mit dem Anschlaglineal 18 ist schwenkbar gelagert, so daß verschiedene Winkel zwischen der Schnittebene des Trennschleifers 20 und dem Anschlaglineal 18 einstellbar sind. Das Anschlaglineal 18 ist über seine Länge stufenartig abgesetzt, was vor allem aus Fig. 3 ersichtlich ist.

Ist der vom Halter 13 aufgenommene Trennschleifer 20 vertikal ausgerichtet, so daß die Schnittebene des scheibenförmigen Trennwerkzeuges 22 vertikal steht, so liegt diese Schnittebene seitlich der einen Längskante 19 der Ständerplatte 1.

Die Fig. 1 bis 3 zeigen den Maschinenständer in der Stellung, in der gerade Längsschnitte ausgeführt werden, und zwar parallel und entlang der einen Längskante 19 der Ständerplatte 1. Zur Einstellung der gewünschten Schnittiefe werden die Gewindebolzen 6 mit den Knebeln 7 etwas gelöst, so daß die Verspannung zwischen Schwenkteil 4 und Widerlager 9 gelockert ist. Dann werden die Federbolzen 12 nach außen gezogen und der Schwenkteil 4 und das Widerlager 9 soweit nach unten geführt, bis die gewünschte Schnittiefe erreicht ist, dann wird der Federbolzen 12 wieder in eine Bohrung der Lochleiste 11 eingerastet, und anschließend werden die Gewindebolzen 6 mit den Knebeln 7 wieder festgezogen. Anstelle von Lochleiste 11 und Federbolzen 12, die der Höhenverstellung des Werkzeuges gegenüber der Ständerplatte 1 dienen, könnten hier auch Gewindespindeln vorgesehen werden, die eine stufenlose Höhenverstellung ermöglichen. Mittels der hier vorgesehenen Lochleiste 11 ist die Höhenverstellung in Schritten möglich, die der Teilung der Bohrungen in der Lochleiste 11 entspricht. Um den Trennschleifer 20 gegenüber der Ständerplatte 1 schräg zu stellen, werden die Gewindebolzen 6 etwas gelöst, worauf der Schwenkteil 4 zusammen mit der Führung um die zentrale Achse der Gewindebolzen 6 verschwenkbar ist. Am Umfang der scheibenförmigen Schwenkteile 4 kann je eine Winkelskala angebracht sein und am Widerlager 9 eine feststehende Markierung. Ist die gewünschte Schrägstellung erreicht, werden die Gewindebolzen 6 wieder festgezogen.

Das Anschlaglineal 18 bzw. der dieses Anschlaglineal tragende Schlitten 17 ist entlang den Nuten 15 bzw. 16 verschiebbar. Der Schlitten 17 ist verdrehbar um eine zur Ständerplatte 1 vertikale Achse, so daß das Anschlaglineal gegenüber der Schnittebene des Trennschleifers 20 unterschiedliche Winkellagen einnehmen kann.

### Legende

### zu den Hinweisziffern:

- 1: Ständerplatte
- 2: Lagerbock
- 3: Tragteil
- 4: Schwenkteil
- 5: Stange
- 6: Gewindebolzen
- 7: Knebel
- 8: Längsschlitz
- 9: Widerlager
- 10: Feder
- 11: Lochleiste
- 12: Federbolzen
- 13: Halter
- 14: Bohrung
- 15: Nut
- 16: Nut
- 17: Schlitten
- 18: Anschlaglineal
- 19: Längsrand
- 20: Trennschleifer
- 21: Nut
- 22: Trennwerkzeug

## Patentansprüche

1. Maschinenständer zur Aufnahme eines als Trennschleifer (20) ausgebildeten Handwerkzeuges mit einem im wesentlichen U-förmigen Halter (13), zwischen dessen beiden Wangen das Gehäuse des Trennschleifers (20) festlegbar ist, und der Halter (13) entlang einer Führung verschiebbar gelagert ist und die beiderseitigen Enden der Führung über Lagerböcke (2) mit einer Ständerplatte (1) verbunden sind, wobei die Führung sich parallel zur Ebene der Ständerplatte (1) erstreckt und jeder Lagerbock (2) mindestens aus einem mit der Ständerplatte (1) verbundenen Tragteil (3) besteht und die Ständerplatte (1) als längliches Rechteck ausgebildet ist und die Führung parallel zu den Längsrändern dieses Rechteckes verläuft, dadurch gekennzeichnet, daß ein endseitig an der Führung vorgesehener und am Tragteil (3) anliegender Schwenkteil (4) gegenüber dem Tragteil (3) festspannbar ist, wobei der Schwenkteil (4) eine Gewindebohrung aufweist, in welche ein verdrehbarer Gewindebolzen (6) von der der Führung abgewandten Seite her durch den Tragteil (3) steckbar und eindrehbar ist und daß zur Anlage des endseitig an der Führung vorgesehenen Schwenkteiles (4) am Tragteil (3) des Lagerbockes (2) ein Widerlager (9) vorgesehen ist, das am Tragteil (3) vertikal verschiebbar gelagert ist.

2. Maschinenständer nach Anspruch 1, dadurch gekennzeichnet, daß der Tragteil (3) zur Aufnahme des vorzugsweise manuell verdrehbaren Gewindebolzens (6) einen vertikalen Längsschlitz (8) aufweist.

3. Maschinenständer nach Anspruch 1, dadurch gekennzeichnet, daß Tragteil (3) und Widerlager (9) über Nut (21) und Feder (10) aneinander verschiebbar geführt sind, wobei vorzugsweise die Nut (21) am Tragteil (3) und die Feder (10) am Widerlager (9) vorgesehen sind.

4. Maschinenständer nach Anspruch 1, dadurch gekennzeichnet, daß das Widerlager (9) eine parallel zu seiner Verschieberichtung verlaufende Lochleiste (11) aufweist und ein am Lagerbock (2) gelagerter Federbolzen (12) als Raste vorgesehen ist.

5. Maschinenständer nach den Anspruch 1, dadurch gekennzeichnet, daß Schwenkteil (4) und Widerlager (9) als Kreisscheiben ausgebildet sind und gegebenenfalls am Umfang des kreisscheibenförmigen Schwenkteiles (4) eine Winkelskala angeordnet ist und die Führung vorzugsweise aus mindestens zwei parallel verlaufenden Stangen (5) gebildet ist

6. Maschinenständer nach einem der Ansprüche 1 bis 5, dadurch gekennzeichnet, daß die vertikale Schnittebene der vertikal ausgerichteten Trennscheibe des Trennschleifers (20) seitlich des einen Längsrandes (19) der Ständerplatte (1) liegt.

7. Maschinenständer nach Anspruch 1, dadurch gekennzeichnet, daß in der Ständerplatte (1) mindestens eine parallel zu den Längsrändern (19) verlaufende Nut (15) und mindestens eine dazu rechtwinklig, vorzugsweise im Quermittelbereich der Ständerplatte (1) angeordnete Nut (16) zur Aufnahme eines ein Anschlaglineal (18) tragenden Schlittens (17) vorgesehen sind.

8. Maschinenständer nach Anspruch 1, dadurch gekennzeichnet, daß zur stufenlosen Höhenverstellung des Widerlagers (9) gegenüber dem Lagerbock (2) eine vertikal angeordnete Gewindespindel vorgesehen ist.

## Claims

1. A machine frame for holding a hand tool formed as an abrasive cutter (20), comprising a substantially U-shaped holder (13), between the two arms of which the housing of the abrasive cutter (20) is fixable, and the holder (13) is mounted so as to be displaceable along a guide, and the two ends of the guide are connected to a frame plate (1) via brackets (2), wherein the guide extends parallel to the plane of the frame plate (1), and each bracket (2) comprises at least one supporting member (3) connected to the frame plate (1), and the frame plate (1) is formed as an elongate rectangle, and the guide extends parallel to the longitudinal edges of this rectangle, characterised in that a pivoting member (4), provided on the end of the guide and resting against the supporting member (3), can be clamped relative thereto, the pivoting member (4) having a threaded bore, into which a rotatable threaded bolt (6) is insertable and screwable through the supporting member (3) from the side remote from the guide, and in that an abutment (9), mounted so as to be vertically displaceable on the supporting member (3), is provided to enable the pivoting member (4), provided on the end of the guide, to rest against the supporting member (3) of the bracket (2).

2. A machine frame according to claim 1, characterised in that the supporting member (3) has a vertical longitudinal slot (8) for receiving the preferably manually rotatable threaded bolt (6).

3. A machine frame according to claim 1, characterised in that the supporting member (3) and the abutment (9) are displaceable relative to one another via a groove (21) and a tongue (10), the groove (21) preferably being provided in the supporting member (3) and the tongue (10) preferably being provided on the abutment (9).

4. A machine frame according to claim 1, characterised in that the abutment (9) has a perforated strip (11) extending parallel to its displacement direction, and a spring bolt (12) mounted on the bracket (2) is provided as a detent.

5. A machine frame according to claim 1, characterised in that the pivoting member (4) and the abutment (9) are formed as circular discs, and an angle scale is optionally provided on the circumference of the pivoting member (4) formed as a circular disc, and the guide is preferably formed from at least two bars (5) extending parallel to one another.

6. A machine frame according to any one of claims 1 to 5, characterised in that the vertical cutting plane of the vertically arranged cutting disc of the abrasive cutter (20) is arranged laterally of one longitudinal edge (19) of the frame plate (1).

7. A machine frame according to claim 1, characterised in that, in the frame plate (1), at least one groove (15) extending parallel to the longitudinal edges (19) and at least one groove (16) arranged at right angles thereto and preferably in the transverse central region of the frame plate (1) are provided for receiving a slide (17) carrying a stop rule (18).

8. A machine frame according to claim 1, characterised in that a vertically arranged threaded spindle is provided for the continuously variable vertical adjustment of the abutment (9) relative to the bracket (2).

## Revendications

1. Montant de machine pour recevoir un outil manuel qui se présente sous la forme d'une tronçonneuse à meule (20), comprenant un support (13) sensiblement en forme de U entre les deux joues duquel le boîtier de la tronçonneuse (20) peut être fixé, montant dans lequel le support (13) est monté à coulissement le long d'un guide et les extrémités des deux côtés du guide sont raccordées à une plaque de support (1) par l'entremise de paliers (2), le guide s'étend parallèlement au plan de la plaque de support (1), chaque palier (2) est constitué d'au moins une partie de support (3) reliée à la plaque de support (1), la plaque de support (1) se présente sous la forme d'un rectangle allongé et le guide s'étend parallèlement aux bords allongés de ce rectangle, caractérisé en ce qu'une partie de pivotement (4) prévue à l'extrémité sur le guide et s'appliquant sur la partie de support (3) peut être serrée par rapport à la partie de support (3), la partie de pivotement (4) présentant un alésage fileté, dans lequel un boulon fileté rotatif (6) peut être enfiché du côté opposé au guide à travers la partie de support (3) et vissé et en ce que, pour appliquer la partie de pivotement (4) prévue à l'extrémité sur le guide sur la partie de support (3) du palier (3), il est prévue une contre-butée (9) qui est montée sur la partie de support (3à de manière à pouvoir effectuer un déplacement vertical.

2. Montant de machine selon la revendication 1, caractérisé en ce que la partie de support (3) présente une fente allongée verticale (8) pour recevoir le boulon fileté (6) que l'on peut faire tourner de préférence à la main.

3. Montant de machine selon la revendication 1, caractérisé en ce que la partie de support (3) et la contre-butée (9) sont guidés de manière à pouvoir se déplacer mutuellement via une rainure (21) et un ressort (10), de préférence la rainure étant prévue sur la partie de support (3) et le ressort (10) sur la contre-butée (9).

4. Montant de machine selon la revendication 1, caractérisé en ce que la contre-butée (9) présente une latte perforée (11) s'étendant parallèlement à sa direction de déplacement et il est prévu un boulon à ressort (12) monté sur le palier (2) en tant que cran d'arrêt.

5. Montant de machine selon la revendication 1, caractérisé en ce que la partie de pivotement (4) et la contre-butée (9) se présentent sous la forme de disques circulaires, une échelle d'angles est agencée éventuellement sur la périphérie de la partie de pivotement (4) en forme de disque circulaire et le guide est formé de préférence d'au moins deux tiges (5) s'étendant parallèlement.

6. Montant de machine selon l'une quelconque des revendications 1 à 5, caractérisée en ce que le plan de coupe vertical de la meule de la tronçonneuse (20) orientée verticalement est disposé latéralement par rapport à un bord allongé (19) de la plaque de support (1).

7. Montant de machine selon la revendication 1, caractérisé en ce qu'il est prévu dans la plaque de support (1) au moins une rainure (15) s'étendant parallèlement aux bords allongés (19) et au moins une rainure (16) agencée à angle droit avec la première rainure, de préférence dans la zone centrale transversale de la plaque de support (1) pour recevoir un chariot (17) portant une barre de butée (18).

8. Montant de machine selon la revendication 1, caractérisé en ce qu'il est prévu une tige filetée agencée verticalement pour le déplacement en hauteur progressif de la contre-butée (8) par rapport au palier (2).
